# EUROPÄISCHE PATENTANMELDUNG

(11) **EP 4 596 490 A1**
(43) Veröffentlichungstag der Anmeldung: **06.08.2025**
(21) Anmeldenummer: 24020055.0
(22) Anmeldetag: 13.02.2024
(51) Int. Cl.: C01B 3/04, F28D 7/16

(54) **VERFAHREN UND ANLAGE ZUR HERSTELLUNG VON WASSERSTOFF**

(30) Priorität: 31.01.2024 EP 24020046
(71) Anmelder: Linde GmbH, 82049 Pullach (DE)
(72) Erfinder: Reinke, Michael, 82049 Pullach (DE); Müller-Thorwart, Ole, 82049 Pullach (DE)
(74) Vertreter: Fischer, Werner

(57) **Zusammenfassung**

Es wird ein Verfahren zur Herstellung von Wasserstoff vorgeschlagen, das umfasst, Ammoniak (3) in flüssiger Form bereitzustellen und unter Erhalt eines Ammoniakeinsatzgases (5) einer Einsatzverdampfung (110) zu unterwerfen, das Ammoniakeinsatzgas (5) oder einen Teil hiervon unter Erhalt eines Wasserstoff und Stickstoff enthaltenden Ammoniakspaltgases (7) einer Ammoniakspaltung (130) zu unterwerfen und das Ammoniakspaltgas (7) unter Erhalt eines abgekühlten Ammoniakspaltgases (8) einer Spaltgaskühlung (140) zu unterwerfen, wobei in der Spaltgaskühlung (140) dem Ammoniakspaltgas (7) entzogene Wärme zumindest zum Teil in der Einsatzverdampfung (110) verwendet wird. Eine Anlage zur Durchführung des Verfahrens wird ebenfalls vorgeschlagen.

## Beschreibung

Die Erfindung betrifft ein Verfahren und eine Anlage zur Herstellung von Wasserstoff durch Umsetzung von Ammoniak.

### Hintergrund

Die Erzeugung von Wasserstoff im großtechnischen Maßstab erfolgt derzeit noch überwiegend auf Basis von Kohlenwasserstoffen. Hierbei ist eine Reihe von Verfahren bekannt und in gängigen Nachschlagewerken, beispielsweise im Artikel "Hydrogen" in Ullmann's Encyclopedia of Industrial Chemistry, 15. Juni 2000, DOI: 10.1002/14356007.a13_297, Abschnitt 4, "Production", beschrieben.

Alternativ kann Wasserstoff auch durch Zerlegung (Cracken, Spalten, Reformieren usw.) von Ammoniak gewonnen werden, wobei der Ammoniak als Speicherform von Wasserstoff verwendet werden kann. Es werden zwei Moleküle Ammoniak zu einem Molekül Stickstoff und drei Molekülen Wasserstoff umgesetzt. Die Reaktion ist endotherm und wird durch niedrigen Druck und hohe Temperatur begünstigt. Um einen Wasserstoffverdichter zu vermeiden, sind dennoch höhere Drücke wünschenswert. Eine Übersicht über entsprechende Verfahren findet sich beispielsweise in einem Artikel von I. Lucentini et al., "Review of the Decomposition of Ammonia to Generate Hydrogen", Ind. Eng. Chem. Res. 2021, 60, 51, 18560-18611.

Allgemein soll hier unter "Ammoniak" insbesondere sogenannter technischer Ammoniak mit einem handelsüblichen Gehalt an Fremdkomponenten, insbesondere Wasser, verstanden werden.

Aus der EP 4 112 539 A1 sind ein Verfahren und eine Vorrichtung zur Erzeugung eines Wasserstoffprodukts aus Ammoniak bekannt, wobei ein Ammoniak enthaltender Einsatzstoff unter Verwendung eines brennerbefeuerten Spaltofens mit katalytischer Unterstützung zu einem Wasserstoff und Stickstoff enthaltenden Spaltgas umgesetzt wird, von dem das Wasserstoffprodukt unter Erhalt eines stickstoffreichen, brennbare Stoffe umfassenden Restgases abgetrennt wird, wobei zumindest ein Teil des Restgases zur Befeuerung des Spaltofens verbrannt wird. Aus einer Sauerstoffquelle wird ein sauerstoffreicher Stoffstrom zugeführt und direkt oder nach Zumischung von Luft bei der Verbrennung des Restgases als Oxidationsmittel eingesetzt.

Aus der EP 4 112 540 A1 sind ein Verfahren und eine Vorrichtung zur Erzeugung eines Wasserstoffprodukts aus Ammoniak bekannt, wobei ein erster Ammoniak enthaltender Einsatzstoff einem über einen importierten Energieträger beheizten ersten Spaltreaktor zugeführt wird, um Ammoniak mit katalytischer Unterstützung in Wasserstoff und Stickstoff zu spalten und ein heißes, Wasserstoff und Stickstoff enthaltendes erstes Spaltgas zu erhalten. Ein zweiter Ammoniak enthaltender Einsatzstoff wird in einem zweiten Spaltreaktor zu einem Wasserstoff und Stickstoff enthaltenden zweiten Spaltgas umgesetzt, wobei das heiße erste Spaltgas zur Beheizung des zweiten Spaltreaktors eingesetzt und dabei abgekühlt wird.

Die vorliegende Erfindung adressiert insbesondere Probleme, die sich bei der Wärmeintegration in entsprechenden Verfahren ergeben können.

### Übersicht

Vor diesem Hintergrund werden ein Verfahren und eine Anlage zur Herstellung von Wasserstoff durch Umsetzung von Ammoniak mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren zur Herstellung von Wasserstoff umfasst, Ammoniak in flüssiger Form bereitzustellen und unter Erhalt eines Ammoniakeinsatzgases einer Einsatzverdampfung zu unterwerfen, das Ammoniakeinsatzgas oder einen Teil hiervon in einem Ammoniakspaltreaktor unter Erhalt eines Wasserstoff und Stickstoff enthaltenden Ammoniakspaltgases einer Ammoniakspaltung zu unterwerfen und das Ammoniakspaltgas unter Erhalt eines abgekühlten Ammoniakspaltgases einer Spaltgaskühlung zu unterwerfen, wobei in der Spaltgaskühlung dem Ammoniakspaltgas entzogene Wärme zumindest zum Teil in der Einsatzverdampfung verwendet wird.

Das vorgeschlagene Verfahren und seine Ausgestaltungen überwinden spezifische Nachteile von Ammoniakspaltverfahren der eingangs erläuterten Art. Die hohe Austrittstemperatur des Ammoniakspaltreaktors, die bis zu 900°C betragen kann, führt nämlich zu Herausforderungen bei der Wärmeintegration. Mit einem Feed-Effluent-Wärmetauscher könnte das flüssige Ammoniak gegen das heiße Ammoniakspaltgas verdampft werden. Da ein hierfür geeigneter Feed-Effluent-Wärmetauscher mit einem Rohrboden ausgeführt sein muss, der bei Temperaturen von bis zu 900°C dauerhaft stabil und gegenüber Nitrierung unempfindlich ist, kann dieser Wärmetauscher aber nur zu hohen Kosten verwirklicht werden. Möglich ist auch der Einsatz eines Prozessgaskühlers, wie er ähnlich auch zur Dampferzeugung in Dampfreformierungsanlagen verwendet wird. Diese Lösung ist jedoch ungünstig, da für die Ammoniakspaltung im Allgemeinen kein Dampf benötigt wird. Eine weitere Möglichkeit zur Nutzung der Wärme des heißen Ammoniakspaltgases bestünde in seiner Verwendung als Heizmedium in einem zweiten Ammoniakspaltreaktor, wobei seine Temperatur aber u.U. für eine effiziente Ammoniakspaltung nicht hoch genug ist.

Vorliegend wird nun eine Lösung zur Überwindung der genannten Schwierigkeiten vorgeschlagen, die umfasst, die Hochtemperaturwärme des Ammoniakspaltgases am Ausgang des Ammoniakspaltreaktors für die Verdampfung des Ammoniaks, d.h. zur Bereitstellung des Ammoniakeinsatzgases zu nutzen. Dieses Konzept ermöglicht die Integration von Wärme in den Ammoniakspaltprozess in Kombination mit einem geeigneten und technisch realisierbaren Wärmetauscherdesign. Aufgrund der guten Wärmeübertragung auf eine siedende Flüssigkeit können die Metalltemperaturen im Wärmetauscher begrenzt werden, so dass eine kosteneffiziente Materialauswahl möglich ist.

In hier vorgeschlagenen Ausgestaltungen kann die Einsatzverdampfung und die Spaltgaskühlung unter Verwendung einer gemeinsamen Wärmeübertragungseinrichtung mit einem Verdampferbehälter und einem in dem Verdampferbehälter angeordneten Rohrbündel mit mehreren Rohren durchgeführt werden. Hierbei kann auf an sich bekannte, bewährte Konzepte für Wärmeübertragungseinrichtungen zurückgegriffen werden.

In hier vorgeschlagenen Ausgestaltungen kann zumindest ein Teil der Einsatzverdampfung in dem Verdampferbehälter und zumindest ein Teil der Spaltgaskühlung in dem Rohrbündel durchgeführt werden. Durch die Anwesenheit von Flüssigkeit an den Außenflächen der Rohre des Rohrbündels können, wie erwähnt, nachteilige Effekte wie beispielsweise eine Nidridierung des Rohrwerkstoffs, verhindert werden.

In hier vorgeschlagenen Ausgestaltungen kann das Ammoniakspaltgas oder ein Teil hiervon in einem Einspeisebereich in die Wärmeübertragungseinrichtung eingespeist und in dem Einspeisebereich auf die Rohre des Rohrbündels verteilt werden, wobei der Einspeisebereich mit einer hitzebeständigen Auskleidung ausgekleidet ist. Es können übliche Auskleidungen verwendet werden, die bewirken, dass ein entsprechender Bereich den autretenden Temperaturen standhält.

In hier vorgeschlagenen Ausgestaltungen kann ein durch das Rohrbündel eingenommener Raum in dem Verdampferbehälter eine langgestreckte Form mit einer horizontal verlaufenden Rohrbündellängsachse aufweisen, der Verdampferbehälter kann ebenfalls eine langgestreckte Form mit einer Verdampferbehälterlängsachse aufweisen, und die Rohrbündellängsachse und die Verdampferbehälterlängsachse können parallel zueinander angeordnet und voneinander beabstandet sein. Hierdurch kann insbesondere in einem Bereich oberhalb des Rohrbündels ein ausreichender Raum zur Abtrennung von Flüssigkeit und Gas geschaffen werden, beispielsweise wenn eine Schaumbildung zu erwarten ist, und das Rohrbündel kann vollständig untergetaucht betrieben werden, so dass die erwähnten guten Wärmeübertragungseigenschaften der Flüssigkeit genutzt werden können.

In hier vorgeschlagenen Ausgestaltungen können die Rohre des Rohrbündels mehrere Rohre mit einem ersten Rohrquerschnitt und ein oder mehrere Rohre mit einem zweiten Rohrquerschnitt aufweisen, wobei der zweite Rohrquerschnitt größer als der erste Rohrquerschnitt ist. Hierdurch ist es möglich, die Wärmetauschfläche der jeweiligen Rohre gezielt an die jeweiligen Erfordernisse anzupassen.

In hier vorgeschlagenen Ausgestaltungen kann eine Durchströmung des einen oder der mehreren zweiten Rohre entsprechend einer zu übertragenden Wärmemenge eingestellt werden. Hierdurch ist eine gezielte Umgehung (Bypass) der eigentlichen Wärmetauscherrohre möglich, wie auch unten erläutert.

In hier vorgeschlagenen Ausgestaltungen kann die Wärmeübertragungseinrichtung einen Separatorbehälter aufweisen, der über eine Downcomer- und eine Riserleitunge mit dem Verdampferbehälter verbunden ist. Auf diese Weise kann eine verbesserte Abtrennung von Gas und Flüssigkeit erzielt werden.

In hier vorgeschlagenen Ausgestaltungen kann die Wärmeübertragungseinrichtung so betrieben werden, dass flüssiger Ammoniak über die Downcomerleitung in den Verdampferbehälter abfließt und im Verdampferbehälter verdampfter Ammoniak über die Riserleitung in den Separatorbehälter eintritt. Auf diese Weise kann die erwähnte verbesserte Verdampfung erzielt werden.

Die vorgeschlagene Anlage zur Herstellung von Wasserstoff ist dafür eingerichtet, flüssigen Ammoniak unter Erhalt eines Ammoniakeinsatzgases einer Einsatzverdampfung zu unterwerfen, das Ammoniakeinsatzgas oder einen Teil hiervon unter Erhalt eines Wasserstoff und Stickstoff enthaltenden Ammoniakspaltgases einer Ammoniakspaltung zu unterwerfen und das Ammoniakspaltgas unter Erhalt eines abgekühlten Ammoniakspaltgases einer Spaltgaskühlung zu unterwerfen, wobei die Anlage weiterhin dafür eingerichtet ist, in der Spaltgaskühlung dem Ammoniakspaltgas entzogene Wärme zumindest zum Teil in der Einsatzverdampfung zu verwenden.

Zu weiteren Merkmalen und Vorteilen einer entsprechenden Anlage und Ausgestaltungen hiervon sei auf die obigen Erläuterungen betreffend das vorgeschlagene Verfahren und seine Ausgestaltungen ausdrücklich verwiesen, da diese hierfür in gleicher Weise gelten.

Entsprechendes gilt auch für eine Anlage, die dazu eingerichtet ist, ein Verfahren gemäß einer beliebigen Ausgestaltung durchzuführen.

### Zeichnungen

Ausführungsformen der Erfindung werden nachfolgend rein beispielhaft unter Bezugnahme auf die beigefügten Zeichnungen beschrieben, wobei
Figur 1 eine Wärmeintegration in Form eines Blockdiagramms zeigt;
Figuren 2A und 2B eine Wärmeübertragungseinrichtung zeigen;
Figur 3 eine weitere Wärmeübertragungseinrichtung zeigt; und
Figuren 4A und 4B Details einer weiteren Wärmeübertragungseinrichtung zeigen.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Nachfolgend ist von bestimmten Typen von Wärmeübertragungseinrichtungen die Rede. Zum fachmännischen Verständnis wird dabei ausdrücklich auf einschlägige Fachliteratur verwiesen, wie beispielsweise R.L. Shilling et al., "Heat-Transfer Equipment", Abschnitt 11 in D.W. Green (Hrsg.), "Perry's Chemical Engineers' Handbook", 7. Auflage 1997, McGraw-Hill. Einschlägig ist dabei insbesondere Abschnitt 11-33, "TEMA-Style Shell-and-Tube Heat Exchangers" und die Figur 11-35, wo unterschiedliche Arten von Wärmetauschern gemäß den "Standards of the Tubular Exchanger Manufacturers Association" in der 6. Auflage 1978 dargestellt sind.

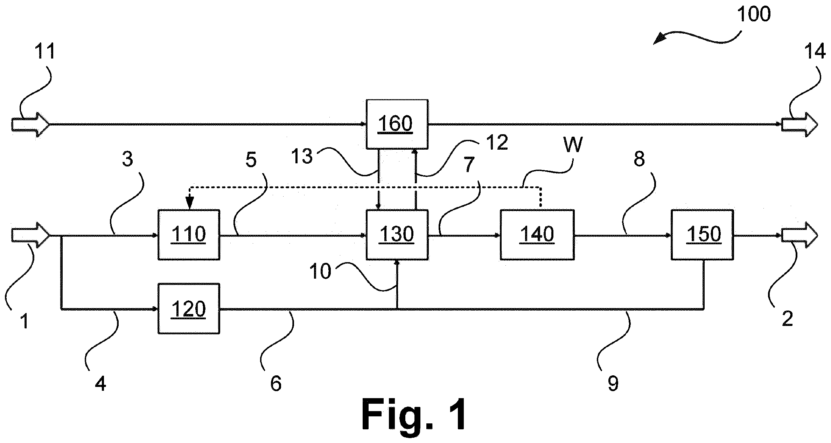

In Figur 1 ist eine Wärmeintegration in einem Verfahren 100 zur Herstellung von Wasserstoff 2 durch Umsetzung von Ammoniak 1 in einem Blockdiagramm veranschaulicht. In dem Verfahren wird eine Einsatzverdampfung 110, eine Brennstoffverdampfung 120, eine Ammoniakspaltung 130, eine Spaltgaswärmerückgewinnung 140, eine Druckwechseladsorption 150 und eine Rauchgaswärmerückgewinnung 160 vorgenommen bzw. eingesetzt.

Der Ammoniak wird in Teilströmen 3 und 4 auf die Einsatzverdampfung 110 und die Brennstoffverdampfung 120 aufgeteilt und dort jeweils unter Erhalt eines Ammoniakeinsatzgases 5 und eines Ammoniakbrenngases 6 verdampft. Das Ammoniakeinsatzgas 5 wird unter Erhalt eines Ammoniakspaltgases 7 der Ammoniakspaltung 130 zugeführt. Das Ammoniakspaltgas 7 wird unter Erhalt eines nun mit 8 bezeichneten abgekühlten Ammoniakspaltgases der Spaltgaswärmerückgewinnung 140 unterworfen.

Das abgekühlte Ammoniakspaltgas 8 wird unter Erhalt des im Wesentlichen reinen Wasserstoffs 2 und eines Druckwechseladsorptionsrestgases 9, das insbesondere Wasserstoff, nicht umgesetzten Ammoniak und Stickstoff enthalten kann, der Druckwechseladsorption 150 unterworfen. Das Druckwechseladsorptionsrestgas 9 wird mit dem Ammoniakbrenngas 6 zu einem Sammelstrom 10 vereinigt und zur Beheizung der Ammoniakspaltung 130 verfeuert. Hierbei kann Verbrennungsluft 11 eingesetzt werden, die in der Rauchgaswärmerückgewinnung 160 unter Erhalt erwärmter Verbrennungsluft 13 aufgeheizt werden kann. Bei der Verbrennung gebildetes Rauchgas 12 wird durch die Rauchgaswärmerückgewinnung 160 geführt und dort unter Erhalt von abgekühltem Rauchgas 14 abgekühlt.

In hier vorgeschlagenen Ausgestaltungen des Verfahrens 100 wird, wie mit einem punktierten Pfeil veranschaulicht, in der Spaltgaswärmerückgewinnung 140 dem Ammoniakspaltgas 7 entzogene Wärme W in der Einsatzverdampfung 110 zur Verdampfung des Teilstroms 3 verwendet. Die Verwendung der Wärme W ist nicht hierauf beschränkt, sondern kann, insbesondere unter Berücksichtigung der vorstehend genannten Probleme, auch für weitere Zwecke wie die Verdampfung des Anteils 4 zur Bereitstellung des Ammoniakbrenngases 6 verwendet werden.

Das heiße Ammoniakspaltgas 7, das den Ammoniakspaltreaktor verlässt (Temperatur ca. 900 °C), wird in den hier vorgeschlagenen Ausgestaltungen des Verfahrens 100 also zur Verdampfung des Anteils 3, und damit zur Bereitstellung des Ammoniakeinsatzes 5, verwendet. Auch eine Verdampfung des Anteils 4 zur Bildung des Ammoniakbrenngases 6 kann entsprechend vorgenommen werden, so dass auf separate Apparate hierfür verzichtet werden kann. Auch eine Kombination der Einsatz- und Brennstoffverdampfung 110, 120 in einem gemeinsamen Apparat kann gemäß Ausgestaltungen vorgesehen sein.

Die grundlegenden Konstruktionsmerkmale des Prozessgaskühlers (PGC) in einer Anlage zur Dampfreformierung (SMR) können dabei berücksichtigt werden. Nachfolgend veranschaulichte und erläuterte Aspekte umfassen dabei einen feuerfest ausgekleideten rohrseitigen Einlassbereich, ggf. Ferrules zum Schutz des vorderen Rohrbodens vor heißem Ammoniakspaltgas 7, und ein insbesondere zentrales Bypassrohr für die Leistungsregelung, Kontrolle und Vermischung der Ströme in einem rohrseitigen Auslassbereich. Da die Rohre und Rohrböden, wie erwähnt, immer in Kontakt mit siedendem Ammoniak sind, der einen hohen Wärmeübergangskoeffizient aufweist, ist es möglich, die Betriebstemperaturen der Metalle zu begrenzen und somit eine kosteneffiziente Materialauswahl und eine zuverlässige mechanische Konstruktion zu ermöglichen.

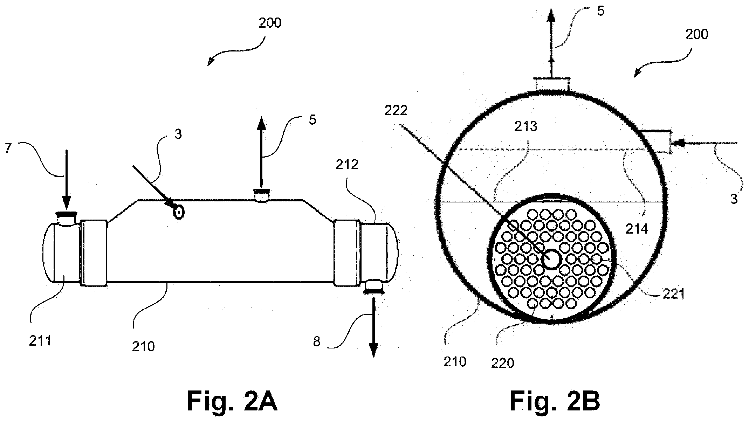

In hier vorgeschlagenen Ausgestaltungen des Verfahrens 100 wird, wie mehrfach erwähnt, die Einsatzverdampfung 110 und die Spaltgaskühlung 140 unter Verwendung einer gemeinsamen Wärmeübertragungseinrichtung vorgenommen. Ein Beispiel ist in den Figuren 2A und 2B dargestellt, wobei Figur 2A eine Außenlängsansicht und Figur 2B eine Querschnittsansicht darstellt.

Die Wärmeübertragungseinrichtung 200 weist einen Verdampferbehälter 210 und ein in dem Verdampferbehälter 210 angeordnetes Rohrbündel 220 mit mehreren Rohren 221, 222 auf. Einspeise- und Entnahmeheader für Ammoniakspaltgas 7, 8 sind mit 211 bzw. 212 bezeichnet. Diese dienen, wie beispielsweise aus der oben zitierten Fachliteratur bekannt, zur Verteilung von Gas auf und Sammeln von Gas aus den Rohren 221, 222 des Rohrbündels 220.

Die Einspeisung und Entnahme des Ammoniakspaltgases 7, 8 ist aus der entsprechenden Bezeichnung ersichtlich. Einspeisungs- und Entnahmestutzen sind nicht gesondert bezeichnet. Die Einspeisung des Ammoniaks 3 bzw. eines entsprechenden Teilstroms, wie er in Figur 1 veranschaulicht ist, in flüssiger Form und die Entnahme des Ammoniakeinsatzgases 5 ist ebenfalls aus den entsprechenden Bezugszeichen ersichtlich. Erneut sind Einspeisungs- und Entnahmestutzen der Übersichtlichkeit halber nicht veranschaulicht.

Aus den Figuren 2A und 2B ergibt sich damit, dass zumindest ein Teil der Einsatzverdampfung 110 in dem Verdampferbehälter 210 und zumindest ein Teil der Spaltgaskühlung 140 in dem Rohrbündel 220 durchgeführt wird.

Wie aus der Querschnittsdarstellung der Figur 2B ersichtlich, weist ein durch das Rohrbündel 220 eingenommener Raum in dem Verdampferbehälter 210 eine langgestreckte Form mit einer Rohrbündellängsachse auf. Der Verdampferbehälter 210 weist ebenfalls eine langgestreckte Form mit einer Verdampferbehälterlängsachse auf. Die Rohrbündellängsachse und die Verdampferbehälterlängsachse sind parallel zueinander angeordnet und voneinander beabstandet, so dass sich oberhalb des Rohrbündels 220 ein größerer Raum ergibt als unterhalb. Die genannten Achsen verlaufen in der Darstellung der Figur 2B senkrecht zur Papierebene. Hierdurch kann der Ammoniak 3 in dem Verdampferbehälter 210 bis zu einem Ammoniakspiegel 213 anstehen und Schaum bis zu einer Schaumhöhe 214 zugelassen werden.

Wie ebenfalls aus Figur 2B ersichtlich, weisen die Rohre 221, 222 des Rohrbündels 220 mehrere Rohre 221 mit einem ersten Rohrquerschnitt und ein oder mehrere Rohre 222 mit einem zweiten Rohrquerschnitt auf, wobei der zweite Rohrquerschnitt größer als der erste Rohrquerschnitt ist. In Figur 2B ist dabei nur eines der Rohre 221 mit dem ersten Rohrquerschnitt bezeichnet. Eine Durchströmung des einen oder der mehreren zweiten Rohre 222 kann dabei zur Einstellung einer zu übertragenden Wärmemenge eingestellt werden, da eine Wärmeaustauschfläche des einen oder der mehreren Rohre 222 mit dem zweiten Rohrquerschnitt geringer ist als eine Wärmeaustauschfläche der Rohre 221 mit dem ersten Rohrquerschnitt. Damit kann in einfacher und effektiver Weise ein Bypass des Wärmeaustauschs in den Rohren 221 mit dem ersten Rohrquerschnitt bewirkt werden.

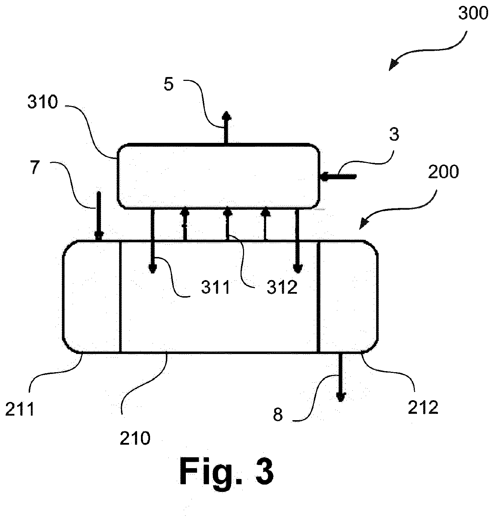

In Figur 3 ist eine alternative Ausgestaltung einer Wärmeübertragungseinrichtung dargestellt und insgesamt mit 300 bezeichnet. Diese kann Komponenten umfassen, die teilweise oder vollständig jenen der Wärmeübertragungseinrichtung 200 gleichen oder eine gleiche, vergleichbare oder ähnliche Funktion erfüllen und daher entsprechend bezeichnet sind. Die Wärmeübertragungseinrichtung 300 weist einen Separatorbehälter 310 auf, der über Downcomerleitungen 311 (Fallleitungen für Flüssigkeit) und über Riserleitungen 312 (Steigleitungen für Gas, oder Gas/Flüssigkeitsgemische) mit dem Verdampferbehälter 210 verbunden ist, wobei nur jeweils eine Downcomer- und Riserleitung 311, 312 bezeichnet ist.

Der in den Separatorbehälter 310 eingespeiste Ammoniak 3 bildet in dem Separatorbehälter 310 einen Flüssigkeitsspiegel aus, dessen Höhe entsprechend eingestellt werden kann. Flüssigkeit wird über die Downcomerleitungen 311 in den Verdampferbehälter 210 abgelassen und Gas steigt von dort über die Riserleitungen 312 in den Separatorbehälter 310 auf, von wo es in Form des Ammoniakeinsatzgases 5 abgezogen werden kann. Insbesondere kann dabei die Wärmeübertragungseinrichtung 300 so betrieben werden, dass in dem Verdampferbehälter 210 verdampfender Ammoniak über die Riserleitungen 312 unterhalb eines Ammoniakspiegels in den Separatorbehälter 310 eintritt.

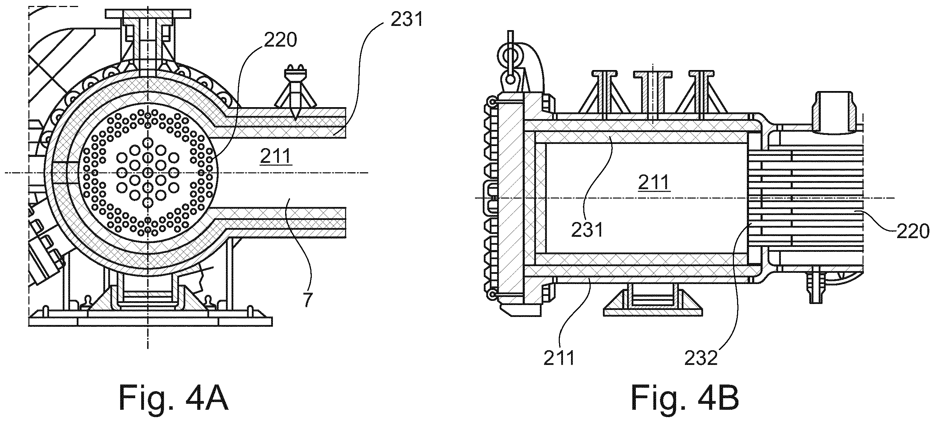

Aufgrund des heißen Ammoniakspaltgases 7 können zusätzliche Maßnahmen erforderlich sein, um die Wärmeübertragungseinrichtung 200 bzw. 300 zu schützen. Dies ist in den Figuren 4A und 4B in einer Quer- und einer Längsschnittsansicht durch einen Endabschnitt einer entsprechenden Wärmeübertragungseinrichtung 200, 300 veranschaulicht, wobei die zuvor verwendeten Bezugszeichen weiter gelten. Das Spaltgas 7 oder ein Teil hiervon wird dabei in dem Einspeisebereich 211 in die Wärmeübertragungseinrichtung 200, 300 eingespeist und in dem Einspeisebereich 211 auf die Rohre 221, 222 des Rohrbündels 220 verteilt. Der Einspeisebereich ist mit einer hitzebeständigen Auskleidung 231 ausgekleidet und der Rohrboden ist durch Ferrules 232 (nur in Figur 4B und an einem Beispiel dargestellt) vom direkten Einfluss des heißen Ammoniakspaltgas geschützt.

Wenngleich vorstehend einige Merkmale in bestimmten Kombinationen miteinander veranschaulicht und erläutert wurden, sind beliebige andere Kombinationen bei technischer Sinnhaftigkeit und Realisierbarkeit möglich. Die Erfindung ist nicht auf die vorstehend beschriebenen Ausgestaltungen beschränkt.

## Patentansprüche

1. Verfahren (100) zur Herstellung von Wasserstoff, das umfasst, Ammoniak (3) in flüssiger Form bereitzustellen und unter Erhalt eines Ammoniakeinsatzgases (5) einer Einsatzverdampfung (110) zu unterwerfen, das Ammoniakeinsatzgas (5) oder einen Teil hiervon unter Erhalt eines Wasserstoff und Stickstoff enthaltenden Ammoniakspaltgases (7) einer Ammoniakspaltung (130) zu unterwerfen und das Ammoniakspaltgas (7) unter Erhalt eines abgekühlten Ammoniakspaltgases (8) einer Spaltgaskühlung (140) zu unterwerfen, wobei in der Spaltgaskühlung (140) dem Ammoniakspaltgas (7) entzogene Wärme zumindest zum Teil in der Einsatzverdampfung (110) verwendet wird.

2. Verfahren (100) nach Anspruch 1, bei dem die Einsatzverdampfung (110) und die Spaltgaskühlung (140) unter Verwendung einer gemeinsamen Wärmeübertragungseinrichtung (200, 300) mit einem Verdampferbehälter (210) und einem in dem Verdampferbehälter (210) angeordneten Rohrbündel (220) mit mehreren Rohren (221, 222) durchgeführt wird.

3. Verfahren (100) nach Anspruch 2, das umfasst, weiteren Ammoniak (4) in flüssiger Form bereitzustellen und unter Erhalt eines Ammoniakbrenngases (6), das zur Beheizung in der Ammoniakspaltung (130) verwendet wird, einer Brenngasverdampfung (120) zu unterwerfen, wobei die Einsatzverdampfung (110) und die Brenngasverdampfung (120) unter Verwendung der gemeinsamen Verdampfungseinrichtung (200, 300) oder einer separaten Verdamfpungseinrichtung durchgeführt wird.

4. Verfahren (100) nach Anspruch 2 oder Anspruch 3, bei dem das Spaltgas (7) oder ein Teil hiervon in einem Einspeisebereich (211) in die Wärmeübertragungseinrichtung (200, 300) eingespeist und in dem Einspeisebereich (211) auf die Rohre (221, 222) des Rohrbündels (220) verteilt wird, wobei der Einspeisebereich mit einer hitzebeständigen Auskleidung (231) ausgekleidet ist und/oder ein Eintrittsbereich in die Rohre (221, 222) jeweils mit hitzebeständigen Ferrules (232) versehen ist.

5. Verfahren (100) nach einem der Ansprüche 2 bis 4, bei dem ein durch das Rohrbündel (220) eingenommener Raum in dem Verdampferbehälter (210) eine langgestreckte Form mit einer Rohrbündellängsachse aufweist, der Verdampferbehälter (210) eine langgestreckte Form mit einer Verdampferbehälterlängsachse aufweist, und die Rohrbündellängsachse und die Verdampferbehälterlängsachse parallel zueinander angeordnet und voneinander beabstandet sind.

6. Verfahren (100) nach einem der Ansprüche 2 bis 5, bei dem die Rohre (221, 222) des Rohrbündels (220) mehrere Rohre (221) mit einem ersten Rohrquerschnitt und ein oder mehrere Rohre (222) mit einem zweiten Rohrquerschnitt aufweisen, wobei der zweite Rohrquerschnitt größer als der erste Rohrquerschnitt ist.

7. Verfahren (100) nach Anspruch 6, bei dem eine Durchströmung des einen oder der mehreren zweiten Rohre (222) zur Einstellung einer zu übertragenden Wärmemenge eingestellt wird.

8. Verfahren nach einem der Ansprüche 2 bis 7, bei dem die Wärmeübertragungseinrichtung (300) einen Separatorbehälter (310) aufweist, der über Downcomerleitungen (311) und über Riserleitungen (312) mit dem Verdampferbehälter (210) verbunden ist.

9. Anlage zur Herstellung von Wasserstoff, die dafür eingerichtet ist, flüssigen Ammoniak (3) unter Erhalt eines Ammoniakeinsatzgases (5) einer Einsatzverdampfung (110) zu unterwerfen, das Ammoniakeinsatzgas (5) oder einen Teil hiervon unter Erhalt eines Wasserstoff und Stickstoff enthaltenden Ammoniakspaltgases (7) einer Ammoniakspaltung (130) zu unterwerfen, und das Ammoniakspaltgas (7) unter Erhalt eines abgekühlten Ammoniakspaltgases (8) einer Spaltgaskühlung (140) zu unterwerfen, wobei die Anlage dafür eingerichtet ist, in der Spaltgaskühlung (140) dem Ammoniakspaltgas (7) entzogene Wärme zumindest zum Teil in der Einsatzverdampfung (110) zu verwenden.

10. Anlage nach Anspruch 9, die zur Durchführung eines Verfahrens nach einem der Ansprüche 1 bis 8 eingerichtet ist.
